# EUROPEAN PATENT SPECIFICATION

(11) **EP 2 413 660 B1**
(45) Date of publication and mention of the grant of the patent: **05.03.2014**
(21) Application number: 10170740.4
(22) Date of filing: 26.07.2010
(51) Int. Cl.: H05B 33/08, H02M 3/158

(54) **Driving circuit with a boost converter transformed into a buck converter for driving power LEDs**
Antriebsschaltung mit einem Aufwärtswandler, der zum Antrieb von Hochleistungs-LEDs in einen Abwärtswandler umgewandelt werden kann
Circuit de commande doté d'un convertisseur survolteur transformé en convertisseur dévolteur pour la commande de diodes d'alimentation

(43) Date of publication of application: 01.02.2012
(73) Proprietor: Thales Deutschland GmbH, 70435 Stuttgart (DE)
(72) Inventor: Telefont, Heinz, 3500, Krems/Egelsee (AT)
(74) Representative: Kohler Schmid Möbus

(56) References cited:
- US-A1- 2004 090 215
- US-A1- 2005 068 459
- US-A1- 2006 176 037
- US-A1- 2007 152 604

## Description

### Background of the invention

The invention relates to a driving circuit for driving LEDs, in particular of an LED signal, comprising a boost converter for converting an input voltage into a higher output voltage, with the boost converter comprising an inductor.

Such a driving circuit is known from US 2007/152604 A1.

Boost converters for converting an input voltage into a higher output voltage and buck converters for converting an input voltage into a lower output voltage are commonly known. Also integrated circuits are known which can be used selectively either as a boost converter or as a buck converter, but these integrated circuits are complex in construction and wiring.

In railway safety systems, boost converters are used for driving LEDs of a signal. With more efficient LEDs becoming available, the number of LEDs required to obtain the same luminosity decreases, e.g. from twelve LEDs to only two LEDs, and a buck converter is needed instead of a boost converter to drive the reduced number of power LEDs.

### Objet of the invention

It is the object of the invention to develop further the driving circuit mentioned above such that on demand, the boost converter can be transformed into a buck converter in a simple and cost-effective manner.

### Short description of the invention

This object is achieved, in accordance with the invention, by a driving circuit having all features of claim 1.

According to the invention, the driving circuit can either be used as a boost converter or as a buck converter by simply adding or removing the additional circuit. Due to the missing inductor, the additional circuit has a reduced number of electronic components compared to a buck converter but does not form a separate buck converter. In a preferred embodiment of the invention, the additional circuit needs only five discrete electronic components. The additional circuit is a simple supplement circuit for existing driving circuits and can be used in a wide range of applications due to the appropriate choice of electronic components.

Furthermore, the driving circuit according to the invention is future-proof as the number of LEDs required for an LED signal with same luminosity will decrease further due to better efficiency of the LEDs.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing, in which:
- Fig. 1: shows a block diagram of the driving circuit according to the invention;
- Fig. 2: shows a test arrangement with a driving circuit according to prior art and with a driving circuit according to the invention; and
- Figs. 3a, 3b: the measurement results of the test arrangement shown in Fig. 2.

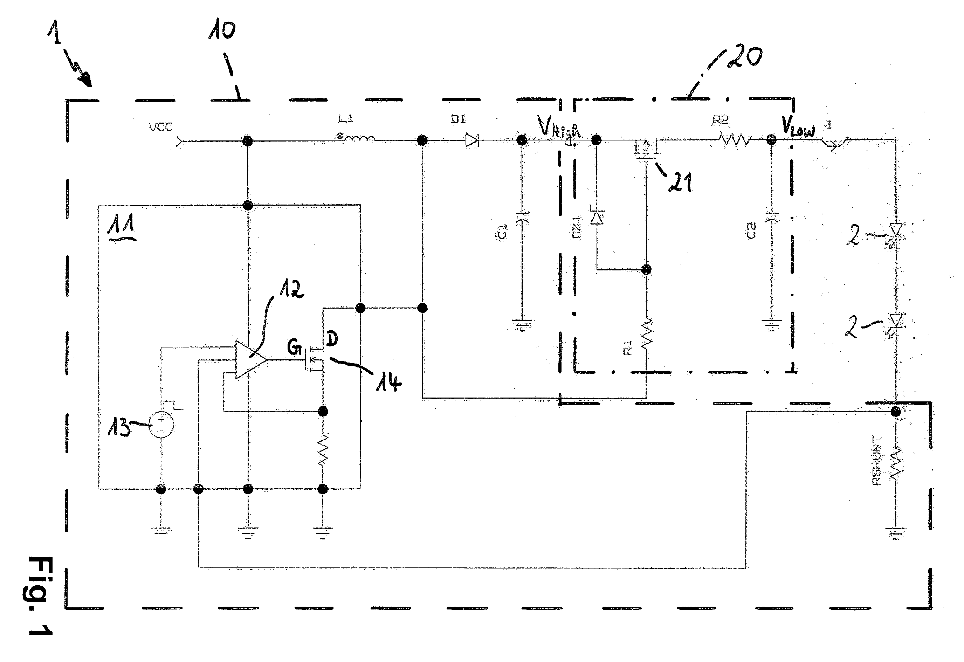

The driving circuit **1** shown in **Fig. 1** is used for driving two power LEDs **2** of an LED signal (not shown) in a railway safety system.

The driving circuit 1 comprises a conventional boost converter **10** for converting an input voltage **V_{CC}** into a higher output voltage **High** and an additional circuit **20** provided between the boost converter 10 and the LEDs 2 to transform subsequently the boost converter 10 into a buck converter which converts the input voltage V_{CC} into a lower output voltage **V_{Low}** for driving the LEDs 2.

The boost converter 10 comprises an inductor **L1,** a diode **D1,** a capacitor **C1** and a switching controller **11** which comprises a comparator **12,** a pulse generator **13** and an N-MOSFET **14.** The current **I** through the two power LEDs 2 causes a voltage drop at a shunt resistor **R_{Shunt}** connected in series to the LEDs 2. This voltage drop is compared by the comparator 12 with a reference voltage of the comparator 12. Based on the comparison, the switching controller 11 controls the current I through the two power LEDs 2 to a value predetermined by the shunt resistor R_{Shunt} via pulse width modulation of the N- MOSFET 14, the gate G of which is connected to the output of the comparator 12. When the N-MOSFET 14 is switched off in the switching controller 11, the drain D of the N-MOSFET 14 becomes high and the capacitor C1 is charged via the diode D1 by the subsequent induction peak of the inductor L1.

The additional circuit 20 comprises a P-Mosfet **21,** a capacitor **C2,** a Zener diode **DZ1,** two resistors **R1, R2,** but no inductor. The additional circuit 20 causes a transfer of the electric charge stored in the capacitor C1 of the boost converter 10 into the capacitor C2 of the additional circuit 20. The additional circuit 20 is designed such that the input voltage V_{cc} can never drive a current directly through the power LEDs 2 thereby enabling an operation of a reduced number of LEDs. When the N-MOSFET 14 is switched on in the switching controller 11, the drain D of the N-Mosfet 14 becomes low. As the gate G of the P-Mosfet 21 is connected to the drain D of the N-MOSFET 14, the P-MOSFET 21 is connected through and the electric charge stored in capacitor C1 is transferred into capacitor C2. The resistor R2 limits the current from capacitor C1 to capacitor C2, the diode D1 prevents a current flow in the other direction, and the Zener diode DZ1 limits voltage peaks between gate G and source S of the P-MOSFET 21. When the N-Mosfet 14 is switched off in the switching controller 11, the drain D of the N-Mosfet 14 becomes high and the capacitor C1 is charged via the diode D1 by the subsequent induction peak of the inductor L1. The P-MOSFET 21 is blocked and the LEDs 2 are supplied with current by capacitor C2.

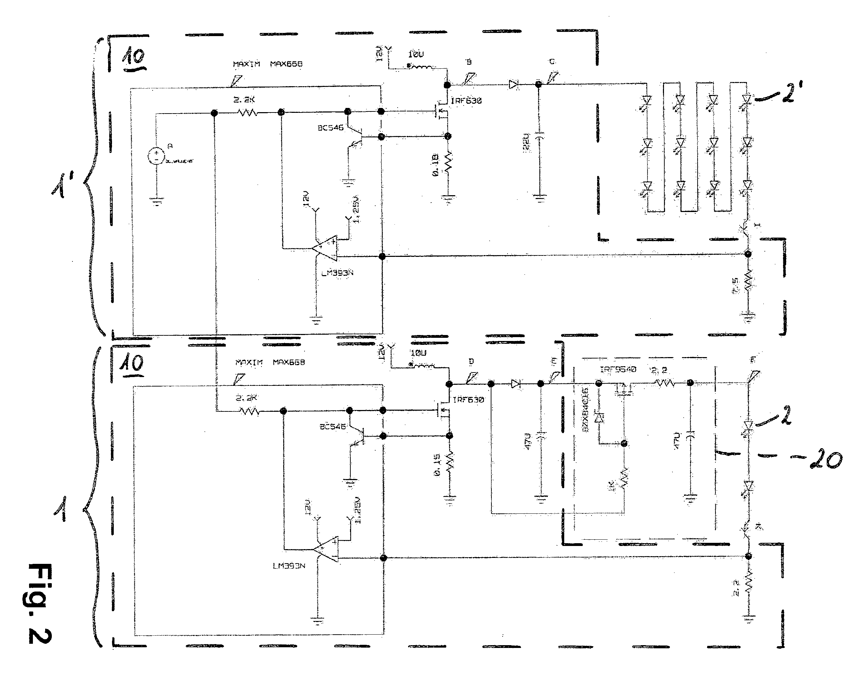

**Fig. 2** shows an test arrangement of both a conventional driving circuit **1'** comprising the boost converter 10 for driving twelve power LEDs **2'** with a higher voltage High than the input voltage V_{cc} and the inventive driving circuit 1 comprising the boost converter 10 and the additional circuit 20 for driving only two power LEDs 2 with a lower voltage V_{Low} than the input voltage V_{cc}. These two power LEDs 2 have the same luminosity as the twelve power LEDs 2' due to a better efficiency.

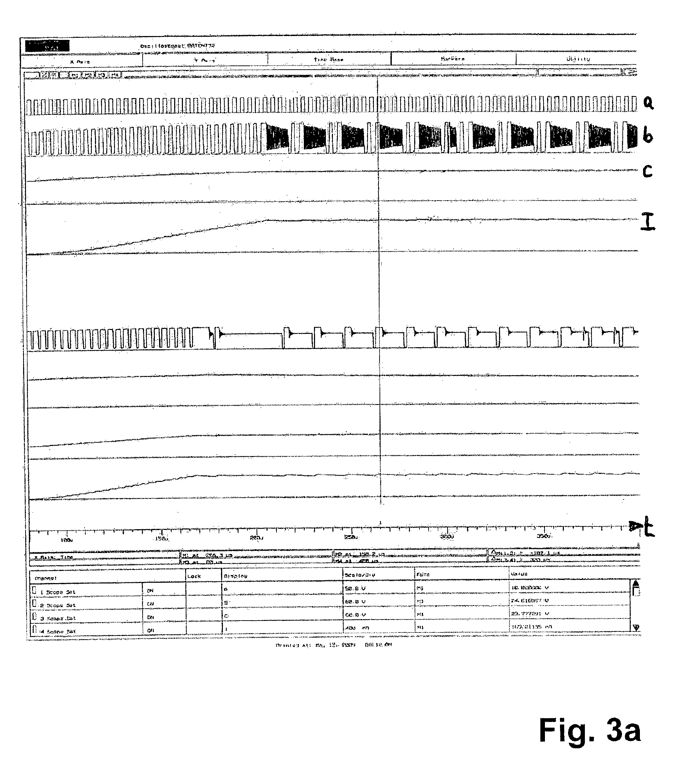

**Fig. 3a** shows the measurement results of the conventional driving circuit 1' taken over time, wherein:
curve a is the pulse output of pulse generator 13 at measurement point A in Fig. 2;
curve b is the voltage V of the conventional driving circuit 1' at measurement point B in Fig. 2;
curve b is the voltage V_{high} of the conventional driving circuit 1' at measurement point B in Fig. 2; and
curve d is the current I of the conventional driving circuit 1' through the LEDs 2' in Fig. 2.

In the conventional driving circuit 1', the voltage V_{high} of 23.7V is higher than the input voltage V_{cc} of 12V.

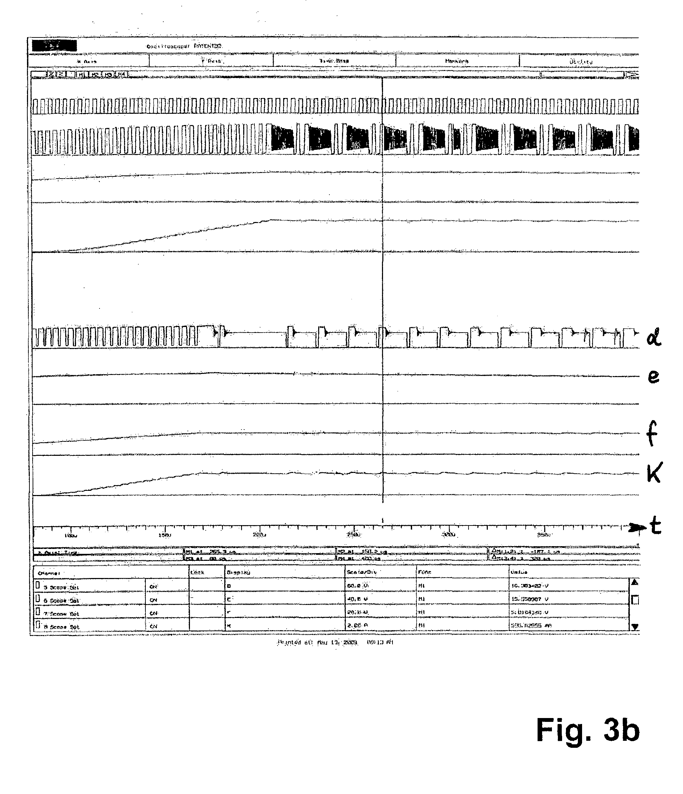

**Fig. 3b** shows the measurement results of the driving circuit 1 according to the invention taken over time, wherein:
curve d is the voltage V of the inventive driving circuit 1 at measurement point D in Fig. 2;
curve e is the voltage V of the inventive driving circuit 1 at measurement point E in Fig. 2;
curve f is the voltage V_{Low} of the inventive driving circuit 1 at measurement point F in Fig. 2; and
curve h is the current K of the inventive driving circuit 1 through the LEDs 2 in Fig. 2.

In the inventive driving circuit 1, the voltage V_{Low} of 5.8V is lower than the input voltage V_{cc} of 12V.

## Claims

1. Driving circuit (1) for driving LEDs (2), in particular of an LED signal, comprising a boost converter (10) for converting an input voltage (V_{CC}) into a higher output voltage (V_{High}), with the boost converter (10) comprising an inductor (L1),
**characterized in that** for transforming subsequently the boost converter (10) into a buck converter which converts the input voltage (V_{CC}) into a lower output voltage (V_{LOW}), an additional circuit (20) is provided between the boost converter (10) and the LEDs (2), wherein the boost converter (10) comprises a switching controller (11) for comparing the voltage drop at a shunt resistor (Rₛₕᵤₙₜ) connected in series to the LEDs (2) with a reference voltage and for controlling the current (I) to a value predetermined by the shunt resistor (Rₛₕᵤₙₜ) and wherein the additional circuit (20) comprises a capacitor (C2) for transferring the electric charge stored in a capacitor (C1) of the boost converter (10) into the capacitor (C2) and a MOSFET (21) connecting the LEDs (2) to the output voltage (V_{High}) of the boost converter (10), the gate (G) of the MOSFET (21) being connected to the switching controller (11) of the boost converter (10).

2. Driving circuit according to claim 1, **characterized in that** the additional circuit (20) comprises a resistor (R2) for limiting the current from the capacitor (C1) of the boost converter (10) into the capacitor (C2) of the additional circuit (20).

3. Driving circuit according to claim 1 or 2, **characterized in that** the additional circuit (20) comprises a Zener diode (Dz1) for limiting the voltage between gate (G) and source (S) of the MOSFET (21).

## Patentansprüche

1. Ansteuerschaltung (1) zum Ansteuern von LEDs (2), insbesondere eines LED-Signals, umfassend einen Aufwärtswandler (10) zum Wandeln einer Eingangsspannung (V_{CC}) in eine höhere Ausgangsspannung (V_{High}), wobei der Aufwärtswandler (10) einen Induktor (L1) aufweist,
**dadurch gekennzeichnet, dass** zum nachfolgenden Umwandeln des Aufwärtswandlers (10) in einen Abwärtswandler, der die Eingangsspannung (V_{CC}) in eine niedrigere Ausgangsspannung (V_{LOW}) wandelt, eine zusätzliche Schaltung (20) zwischen dem Aufwärtswandler (10) und den LEDs (2) vorgesehen ist, wobei der Aufwärtswandler (10) einen Schaltregler (11) aufweist zum Vergleichen des Spannungsabfalls an einem Nebenschlusswiderstand (Rₛₕᵤₙₜ), der mit den LEDs (2) in Reihe geschaltet ist, mit einer Referenzspannung und zum Regeln des Stroms (I) auf einen Wert, der von dem Nebenschlusswiderstand (Rₛₕᵤₙₜ) vorbestimmt ist, und wobei die zusätzliche Schaltung (20) einen Kondensator (C2) zum Übertragen der elektrischen Ladung, die in einem Kondensator (C1) des Aufwärtswandlers (10) gespeichert ist, in den Kondensator (C2) und einen MOSFET (21) aufweist, der die LEDs (2) mit der Ausgangsspannung (V_{High}) des Aufwärtswandlers (10) verbindet, wobei das Gate (G) des MOSFET (21) mit dem Schaltregler (11) des Aufwärtswandlers (10) verbunden ist.

2. Ansteuerschaltung nach Anspruch 1, **dadurch gekennzeichnet, dass** die zusätzliche Schaltung (20) einen Widerstand (R2) aufweist, um den Strom von dem Kondensator (C1) des Aufwärtswandlers (10) in den Kondensator (C2) der zusätzlichen Schaltung (20) zu begrenzen.

3. Ansteuerschaltung nach Anspruch 1 oder 2, **dadurch gekennzeichnet, dass** die zusätzliche Schaltung (20) eine Zenerdiode (Dz1) aufweist, um die Spannung zwischen Gate (G) und Source (S) des MOSFET (21) zu begrenzen.

## Revendications

1. Circuit de commande (1) destiné à commander des diodes LED (2), en particulier d'un signal de diode LED, comprenant un convertisseur survolteur (10) destiné à convertir une tension d'entrée (V_{CC}) en une tension de sortie supérieure (V_{High}), dont le convertisseur survolteur (10) comprend une inductance (L1) ;
**caractérisé en ce que**, pour transformer subséquemment le convertisseur survolteur (10) en un convertisseur dévolteur qui convertit la tension d'entrée (V_{CC}) en une tension de sortie inférieure (V_{LOW}), un circuit supplémentaire (20) est fourni entre le convertisseur survolteur (10) et les diodes LED (2), dans lequel le convertisseur survolteur (10) comprend un contrôleur de commutation (11) destiné à comparer la chute de tension au niveau d'une résistance de dérivation (Rₛₕᵤₙₜ) connectée en série aux diodes LED (2) à une tension de référence, et à commander le courant (I) sur une valeur prédéterminée par la résistance de dérivation (Rₛₕᵤₙₜ), et dans lequel le circuit supplémentaire (20) comprend un condensateur (C2) destiné à transférer la charge électrique stockée dans un condensateur (C1) du convertisseur survolteur (10) dans le condensateur (C2), et un transistor MOSFET (21) connectant les diodes LED (2) à la tension de sortie (V_{High}) du convertisseur survolteur (10), la grille (G) du transistor MOSFET (21) étant connectée au contrôleur de commutation (11) du convertisseur survolteur (10).

2. Circuit de commande selon la revendication 1, **caractérisé en ce que** le circuit supplémentaire (20) comprend une résistance (R2) destinée à limiter le courant en provenance du condensateur (C1) du convertisseur survolteur (10) dans le condensateur (C2) du circuit supplémentaire (20).

3. Circuit de commande selon la revendication 1 ou 2, **caractérisé en ce que** le circuit supplémentaire (20) comprend une diode Zener (Dz1) destinée à limiter la tension entre la grille (G) et la source (S) du transistor MOSFET (21).
